# EUROPÄISCHE PATENTANMELDUNG

(11) **EP 1 510 539 A1**
(43) Veröffentlichungstag der Anmeldung: **02.03.2005**
(21) Anmeldenummer: 03019312.2
(22) Anmeldetag: 27.08.2003
(51) Int. Cl.: C08J 5/06

(54) **Verfahren zur Herstellung von Verbundwerkstoffen aus Elastomeren und darin eingebetteten Polymertextilien oder -folien**

(71) Anmelder: ContiTech Holding GmbH, 30165 Hannover (DE)
(72) Erfinder: Artz, Hermann-Josef, 30826 Garbsen (DE); Hermann, Wolfram, Dr., 31515 Wunstorf (DE); Pursche, Leif Werner, 31535 Neustadt (DE)
(74) Vertreter: Finger, Karsten

(57) **Zusammenfassung**

Die Erfindung betrifft ein Verfahren zur Herstellung von Verbundwerkstoffen aus Elastomeren oder thermoplastischen Elastomeren und darin eingebetteten hoch chemikalien- und temperaturbeständigen Polymertextilien oder -folien sowie Verbundwerkstoffe, die nach dem Verfahren hergestellt sind.

Um die Haftung zwischen chemisch inerten und thermisch stabilen Polymertextilien -oder folien und Elastomeren oder thermoplastischen Elastomeren in Verbundwerkstoffen zu verbessern, wird ein Verfahren mit zumindest folgenden Schritten vorgeschlagen:
- Erwärmen der Polymertextilien oder- folien vor der Einbettung in eine unvulkanisierte Kautschukmischung oder in ein nicht ausgehärtetes thermoplastisches Elastomer auf Temperaturen oberhalb von 260 °C in der Art, dass die Polymerketten der Polymertextilien oder -folien an der Oberfläche physikalisch und/oder chemisch modifiziert werden, wobei die Reißkraft um weniger als 15 % reduziert wird und die Trennkraft zwischen Polymertextilien oder -folien und Elastomer oder thermoplastischem Elastomer im Verbund im Vergleich zum Verbund mit den nicht erwärmten Polymertextilien oder -folien um mindestens 100 % erhöht wird,
- Einbettung der Polymertextilien oder -folien in eine unvulkanisierte Kautschukmischung oder ein nicht ausgehärtetes thermoplastisches Elastomer und gegebenenfalls Aufbringung weiterer Lagen und Schichten und
- Vulkanisation oder Aushärtung des Verbundes.

## Beschreibung

Die Erfindung betrifft ein Verfahren zur Herstellung von Verbundwerkstoffen aus Elastomeren oder thermoplastischen Elastomeren und darin eingebetteten hoch chemikalien- und temperaturbeständigen Polymertextilien oder -folien sowie Verbundwerkstoffe, die nach dem Verfahren hergestellt sind.

Unterschiedlichste Polymermaterialien, wie z. B. Polyamid-, Aramid-, Polyester- oder Poly(p-phenylen-2,6-benzobisoxazol), werden für die Verstärkung von Produkten aus Elastomeren oder thermoplastischen Elastomeren, z. B. Transportbändern, Riemen, Schläuchen, Reifen, flexiblen Behältern oder Luftfedern, verwendet. Die Polymermaterialien werden dabei in unvulkanisierte Kautschukmischungen oder nicht ausgehärtete thermoplastische Elastomere eingebracht und nach der Herstellung des unvulkanisierten Vorproduktes wird vulkanisiert oder ausgehärtet. Die Polymermaterialien können in Form von Textilien oder Folien eingesetzt werden. Bei den Textilien kann es sich um linien- oder flächenförmige textile Gebilde, wie z. B. Filamente, Fasern, Garne, Zwirne, Corde, Gewebe, Gewirke, Gestricke, Geflechte oder Vliese, handeln.

Damit die mit Polymermaterialien verstärkten Verbundwerkstoffe statischen und dynamischen Dauer- und Spitzenbelastungen, auch unter hoher thermischer Beanspruchung, standhalten, werden hohe Anforderungen an die Bindung zwischen Elastomer und dem eingebetteten Polymermaterial gestellt. Um diesen Anforderungen weitgehend gerecht zu werden, ist es seit langem bekannt, auf die Polymermaterialien, insbesondere auf Polymergarne, spezielle Haftimprägnierlösungen oder chemische Haftmittel aufzubringen, die eine sichere Anbindung des Polymermaterials an Elastomere gewährleisten sollen. Zu den bekanntesten Haftimprägnierlösungen gehören die Resorcin-Formaldehyd-Latex-Imprägnierlösungen (kurz RFL-Dips), die beispielsweise durch Sprühen oder Tauchen auf die Polymergarne aufgebracht werden. In Kombination mit den Haftimprägnierlösungen oder alternativ dazu können für eine gute Haftung zwischen Elastomer und verstärkendem Polymermaterial auch spezielle Haftkautschukmischungen für die Einbettung der Polymermaterialien verwendet werden, wobei den Haftkautschukmischungen spezielle haftungsverbessernde Substanzen zugesetzt sind. Es ist auch möglich, dass die Polymermaterialien schon bei der Herstellung mit einem speziellen haftungs verbessernden Mittel (Finish) versehen werden. Auch die Beschichtung von Polymerfasern mit Hilfe einer Plasmabehandlung zur Verbesserung der Elastomer-Faser-Haftung ist z. B. aus der EP-A-0 451 425 bekannt.

Bei Polymermaterialien wie Poly(p-phenylen-2,6-benzobisoxazol), meta-Aramid, para-Aramid, Polyetherketon, Polyphenylensulfid, Polyimid oder Polyaramidimid, die chemisch relativ inert sind und eine hohe Temperaturbeständigkeit (Hitzebeständigkeit) aufweisen, kann aber mit den Verfahren der Imprägnierung mit Haftvermittlern und/oder der Verwendung von speziellen Haftmischungen oftmals nicht die gewünschte Haftung erreicht werden, da die chemisch inerte Materialoberfläche eine feste chemische Anbindung an die Elastomermatrix über die Haftvermittler oder über die in der Haftmischung vorhandenen haftverbessernden Substanzen nicht ermöglicht. Die Haftvermittler werden nur auf der Oberfläche abgelagert, ohne eine chemische Bindung mit diesen Polymermaterialien einzugehen, so dass die Haftung im Wesentlichen auf rein physikalischen Effekten beruht.

Der Erfindung liegt die Aufgabe zu Grunde, die Haftung zwischen chemisch inerten und thermisch stabilen Polymertextilien -oder folien und Elastomeren oder thermoplastischen Elastomeren in Verbundwerkstoffen zu verbessern.

Gelöst wird die Aufgabe gemäß dem Anspruch 1 durch ein Verfahren zur Herstellung eines Verbundwerkstoffes, das zumindest folgende Schritte aufweist:
- Erwärmen der Polymertextilien oder- folien vor der Einbettung in eine unvulkanisierte Kautschukmischung oder in ein nicht ausgehärtetes thermoplastisches Elastomer auf Temperaturen oberhalb von 260 °C in der Art, dass die Polymerketten der Polymertextilien oder -folien an der Oberfläche physikalisch und/oder chemisch modifiziert werden, wobei die Reißkraft um weniger als 15 % reduziert wird und die Trennkraft zwischen Polymertextilien oder -folien und Elastomer oder thermoplastischem Elastomer im Verbund im Vergleich zum Verbund mit den nicht erwärmten Polymertextilien oder -folien um mindestens 100 % erhöht wird,
- Einbettung der Polymertextilien oder -folien in eine unvulkanisierte Kautschukmischung oder ein nicht ausgehärtetes thermoplastisches Elastomer und gegebenenfalls Aufbringung weiterer Lagen und Schichten und
- Vulkanisation oder Aushärtung des Verbundes.

Die Temperatur und die Einwirkzeit bei dem erfindungsgemäßen Verfahren werden so gewählt, dass das Polymermaterial nur an der Oberfläche physikalisch und/oder chemisch modifiziert wird, ohne dass die Reißkraft um mehr als 15 % verringert wird. Werden Polymerfasern eingesetzt, die auch noch eine Avivage aufweisen, so ist das Polymermaterial bei Temperaturen über 260 °C so lange zu behandeln, dass nicht nur die Avivage entfernt oder zerstört ist, sondern auch die Oberfläche des Polymermaterials verändert wird. Die thermische Behandlung darf allerdings nur die Oberfläche betreffen, da sonst die Reißkraft des Materials verloren gehen würde. Temperatur und Einwirkzeit sind abhängig vom chemischen Rohstoff und der Erscheinungsform (z. B. Folie, Faserdurchmesser usw.) der Polymertextilien oder -folien.

Durch dieses Verfahren wird eine verbesserte Haftung von Elastomer zu verstärkendem Polymermaterial im vulkanisierten bzw. ausgehärteten Verbundwerkstoff erzielt, so dass der Verbundwerkstoff hohen statischen und dynamischen Belastungen standhält. Trennungen zwischen Elastomer und Polymertextil oder -folie werden vermieden. Die Haftung bleibt auch nach thermischer Alterung in Luft oder Wasser über dem Niveau der Haftung von beispielsweise mit RFL-Dip versehenen Polymertextilien.

Der Effekt der verbesserten Haftung könnte in einer chemischen Veränderung und Änderung in der kristallinen Struktur der Moleküle an der Polymeroberfläche durch die hohen Temperaturen begründet liegen. Diese veränderten Moleküle können dann besser Wechselwirkungen oder chemischen Reaktionen mit den einbettenden Molekülen z. B. bei der Vulkanisation eingehen. Die Änderung in der kristallinen Struktur äußert sich beispielsweise in einer Zunahme des Zugmoduls und in einem Anstieg der Glasübergangstemperatur.

Das Verfahren bietet außerdem den Vorteil, dass es kostengünstig und einfach technisch zu realisieren ist. So können die Polymertextilien oder -folien z. B. vor der Einbettung in eine Kautschukmischung für einen bestimmten Zeitraum in eine Heizkammer gelegt werden oder die Polymertextilien oder -folien können einfach vor der Einbettung durch eine Gasflamme kontinuierlich hindurchgeführt werden.

Gemäß einer vorteilhaften Weiterbildung der Erfindung werden die chemikalienbeständigen Polymertextilien oder -folien auf Temperaturen ≥ 300 °C erwärmt.

Das Erwärmen der Polymertextilien oder -folien erfolgt bevorzugt im Wesentlichen spannungsfrei.

Es hat sich als vorteilhaft herausgestellt, dass die Polymerketten der Polymertextilien oder -folien an der Oberfläche so chemisch modifiziert werden, dass an der Oberfläche eine irreversible Farbveränderung vorliegt. So kann z. B. eine Farbveränderung von gold/gelb nach rötlich/braun beim erfindungsgemäßen Erwärmen von Poly(p-phenylen-2,6-benzobisoxazol)-Gewebe und eine Verfärbung von weiß nach gelb bei meta-Aramidzwirnen beobachtet werden. Mit derartig modifizierten Materialien kann eine besonders gute Haftung zwischen Elastomer und Polymermaterial erzielt werden.

Das Erwärmen kann in einer reaktiven Gasatmosphäre, z. B. in Anwesenheit von Sauerstoff, erfolgen.

Das Erwärmen kann in einer Heizkammer, bevorzugt einem Muffelofen erfolgen. Dieses Verfahren ist besonders kostengünstig, da große Mengen an Polymertextilien oder -folien in einem wenig lohnintensiven Schritt behandelt werden können. Dabei ist darauf zu achten, dass durch geeignete Temperaturführung Temperaturgradienten innerhalb großer Mengen an Polymermaterial, z. B. innerhalb einer Spule oder einer Geweberolle, vermieden werden, so dass über die gesamte Menge hohe Haftwerte erzielt werden, ohne die Reißkraft wesentlich zu reduzieren.

Es ist aber auch möglich, die Polymertextilien oder -folien durch das Durchlaufen einer offnen Flamme, z. B. einer Gasflamme, oder eines Rohrofens zu erwärmen. Dieses Verfahren ist insbesondere dann von Vorteil, wenn nach dem Erwärmen weitere Schritte zur Veredelung des Materials, z. B. das Aufsprühen oder Streichen eines Haftvermittlers, vorgenommen werden sollen.

Für das erfindungsgemäße Verfahren werden bevorzugt Polymertextilien in Form von linienförmigen Gebilden oder Geweben eingesetzt, die eine große Oberfläche für die Haftung zum Elastomer aufweisen.

Bei den Elastomeren oder thermoplastischen Elastomeren kann es sich um alle dem Fachmann bekannten vulkanisierten Kautschukmischungen mit üblichen Füll- und Zusatzstoffen oder ausgehärteten thermoplastischen Elastomermischungen handeln. Auch zu besonders inerten Kautschuktypen, wie z. B. Silikonkautschuke, können mit dem erfindungsgemäßen Verfahren gute Haftungswerte erzielt werden.

Bei dem Material der Polymertextilien oder -folien handelt es sich bevorzugt um solche Materialien, die gegenüber Polyamid oder Polyester eine deutlich höhere chemische und/oder thermische Resistenz aufweisen. Derartige Materialien werden in Form von linienförmigen textilen Gebilden oder Geweben bei besonders hoch belasteten Verbundwerkstoffen, wie z. B. Transportbändern, Riemen, Schläuchen oder flexiblen Behältern, eingesetzt und bei diesen Materialien ergeben sich oftmals Probleme mit einer ausreichenden Haftung, die durch das erfindungsgemäße Verfahren gelöst werden.

Bei den hoch chemikalien- und temperaturbeständigen Materialien in Form von linienförmigen Gebilden oder Geweben kann es sich beispielsweise um Garne, Zwirne oder Gewebe aus para-Aramid, Polyetherketon, Polyphenylensulfid, Polyimid oder Polyaramidimid handeln, die auch bereits mit einem Finish oder einer Avivage versehen sein können. Bevorzugt werden aber Polymertextilien aus Poly(p-phenylen-2,6-benzobisoxazol) oder meta-Aramid für das Verfahren verwendet. Bei diesen Materialien konnten die größten Verbesserungen der Haftung gegenüber herkömmlich behandelten, z. B. mit einem Haftvermittler versehenen, Textilien dieses Typs verzeichnet werden.

Die Haftung zwischen Polymertextilien oder -folien und Elastomer kann weiter gesteigert werden, wenn die erwärmten Polymertextilien oder -folien vor der Einbettung in die unvulkanisierte Kautschukmischung oder das nicht ausgehärtete thermoplastische Elastomer mit einem Haftvermittler versehen werden. Die vorherige Behandlung der Polymertextilien oder -folien ermöglicht vermutlich eine bessere Wechselwirkung oder chemische Reaktion des Haftvermittlers mit den Molekülen in der Polymeroberfläche.

Es ist auch möglich, die Haftung weiter zu verbessern, indem dem einbettenden Material, also der Kautschukmischung oder dem nicht ausgehärteten thermoplastischen Elastomer, zumindest eine haftungsfördernde Substanz, z. B. ein haftungsverbesserndes Harz, zugesetzt wird.

Mit dem erfindungsgemäßen Verfahren können Verbundwerkstoffe aus Elastomeren und darin eingebetteten hoch chemikalien- und temperaturbeständigen Polymertextilien oder -folien hergestellt werden, die für Einsatzgebiete mit besonders hohen Anforderungen an die statische und dynamische Belastung verwendet werden können. So können z. B. auf diese Weise Antriebsriemen hergestellt werden, die eine besonders hohe Lebensdauer aufweisen. Auch flexible Kraftstoffbehälter, die bei geringem Gewicht eine hohe Aufschlagsicherheit aufweisen, können nach dem erfindungsgemäßen Verfahren hergestellt werden. Die für die Produkte üblichen Herstellungsverfahren müssen für das erfindungsgemäße Verfahren nur geringfügig durch Einfügung des Polymermaterialerwärmungsschrittes modifiziert werden.

Im Folgenden wird die Erfindung anhand von Ausführungsbeispielen näher erläutert, ohne jedoch auf diese Beispiele beschränkt zu sein.

Meta-Aramid-Zwirne (Nomex®) aus Multifilamentgarnen mit 1780 dtex x 2 wurden in Form von ganzen Spulen mit 1 bis 5 kg pro Einheit in einen Muffelofen gelegt. Der Ofen wurde auf 280 °C über eine Dauer von 60 bis 90 min aufgeheizt, um den Temperaturgradienten auf den Spulen zu minimieren. Bei dieser Temperatur wurde der Zwirn noch nicht oberflächlich modifiziert. Nach dem Erreichen der Temperatur von 280 °C an allen Messstellen innerhalb der Spule wurde die Temperatur auf 300 °C erhöht. Die Spulen wurden nach unterschiedlichen effektiven Einwirkzeiten aus dem Ofen entnommen und die Reißkraft des Materials gemäß DIN 53834 ermittelt. Die Restfestigkeit des Zwirnes wurde aus der Reißkraft nach der jeweiligen Behandlung im Vergleich zum Ausgangswert des unbehandelten Materials ermittelt. Ferner wurden die behandelten Zwirne in eine Mischung auf der Basis von Silikonkautschuk eingebettet, der Verbund vulkanisiert und im Anschluss die Haftkraft zwischen Zwirn und Elastomer auf Basis der ASTM D4393-02 ermittelt. Zusätzlich wurden einige Zwirne nach dem Erwärmen und vor der Einbettung mit einem Haftvermittler (Chemosil ®) versehen.
Die Ergebnisse der Versuche sind in Tabelle 1 dargestellt.

**Tabelle 1**

| Einwirkzeit | Restfestigkeit (%) | Haftkraft (N/5 mm) | Haftkraft nach zusätzlicher Haftvermittlerbehandlung (N/5 mm) |
|---|---|---|---|
| 0 s | 100 | 6,48 | |
| 10 s | 99 | 6,43 | |
| 30 s | 97 | 6,71 | |
| 60 s | 98 | 8,97 | |
| 3 min | 102 | 31,2 | |
| 5 min | 102 | 33,9 | 58,9 |
| 10 min | 103 | 34 | 61 |
| 20 min | 105 | 31,2 | 58,1 |
| 25 min | 103 | 31,1 | 60,1 |
| 40 min | 99 | 30,5 | |
| 1 h | 101 | 28 | |
| 2 h | 98 | 35,5 | |
| 5 h | 100 | 31,2 | |
| 14 h | 99 | 33,7 | |

Aus der Tabelle 1 wird ersichtlich, dass die Reißkraft der Zwirne auch nach dem Erwärmen erhalten bleibt, die Haftkraft, das heißt die Haftung zwischen Zwirn und Elastomer, wird aber schon nach 3 minütiger Erwärmung des Zwirns auf 300 °C im Vergleich zum nicht erwärmten Zwirn um fast das Fünffache erhöht. Die Haftung kann noch weiter verbessert werden, wenn ein zusätzlicher Haftvermittler aufgetragen wird.

Es wurde außerdem an den vorgenannten meta-Aramidzwirnen untersucht, ob eine Lagerung des Materials bei Raumtemperatur Folgen für die Haftkraft hat. Es wurde ein Zwirn verwendet, der 20 min bei 300 °C erwärmt wurde. Die Reißkraft und die Haftkraft nach Einbettung wurden nach unterschiedlichen Lagerzeiten bestimmt. Die Ergebnisse zeigt Tabelle 2, wobei ersichtlich wird, dass die Lagerung keinen Einfluss auf die Reißkraft und die Haftkraft hat. Die gemessenen Werte liegen innerhalb der üblichen Toleranzen.

**Tabelle 2**

| Lagerzeit bei RT | Reißkraft | Haftkraft (N/5mm) |
|---|---|---|
| Ausgangswert | 155,5 N | 29,9 |
| nach 7 Tagen | 157,8 | 27,3 |
| nach 14 Tagen | 154,96 | 29,1 |
| nach 28 Tagen | 156,6 | 28,3 |

Ein Gewebe aus Poly(p-phenylen-2,6-benzobisoxazol) (1100 dtex, Fadendichte: 160/10 cm in Kette und Schuss) wurde vor der Einbettung zwischen zwei unvulkanisierte Kautschukmischungsplatten auf Basis eines Styrol-Butadien-Copolymer/Naturkautschuk-Verschnittes und der Vulkanisation in unterschiedlicher Weise erfindungsgemäß behandelt. Zum einen wurde das Gewebe mittels eines fahrbaren Schlittens mit einer Geschwindigkeit von 0,5 m/min im Abstand von 15 mm zur Spitze der blauen Flamme durch eine Gasflamme gezogen, zum anderen wurden kleine Stoffstreifen für 5 min in einen auf 350 °C vorgeheizten Muffelofen gelegt. Im Anschluss wurde die Restfestigkeit des Gewebes aus den Reißkräften gemäß DIN 53857 vor und nach dem Erwärmen ermittelt. Ferner wurde die Haftkraft gemäß DIN 53530 zwischen mit Haftvermittler (Chemosil ®) versehenem Gewebe und einbettendem Elastomer bestimmt (s. Tab. 3). Mit dem erfindungsgemäß behandelten Gewebe kann die Haftkraft bei guter Restfestigkeit stark verbessert werden.

**Tabelle 3**

| Zustand | Restfestigkeit (%) | Haftkraft (N/10 mm) |
|---|---|---|
| unbehandelt | 100 | 3 |
| Flamme + Haftvermittler | 92,5 | 60 |
| Muffelofen + Haftvermittler | 87,4 | 34 |

In den Tabelle 4 und 5 ist dargestellt, welchen Einfluß die Erwärmungstemperatur und die Erwärmungszeit bei der Behandlung des Gewebes in einem Muffelofen haben. Die Versuche zu Tabelle 4 wurden mit einer Verweildauer des Gewebes im vorgeheizten Ofen von 1 min durchgeführt. Die Versuche zu Tabelle 5 wurden bei 300 °C durchgeführt. Restfestigkeit und Haftkraft wurden wie zu Tabelle 3 beschrieben ermittelt.

**Tabelle 4**

| Temperatur | Restfestigkeit (%) | Haftkraft (N/10 mm) |
|---|---|---|
| unbehandelt | 100 | 3 |
| 300 °C | 96 | 25,7 |
| 350 °C | 91,3 | 27,3 |
| 400 °C | 90,2 | 25,6 |
| 450 °C | 80,6 | 26,6 |

**Tabelle 5**

| Einwirkzeit | Restfestigkeit (%) | Haftkraft (N/10 mm) |
|---|---|---|
| unbehandelt | 100 | 5 |
| 1 min | 108 | 8 |
| 5 min | 94 | 20 |
| 10 min | 97 | 25 |
| 15 min | 94 | 27 |
| 50 min | 88 | 29 |

Aus den Tabellen 4 und 5 wird ersichtlich, dass für das erfindungsgemäße Verfahren ein breites Behandlungsfenster für die Prozessführung zur Verführung steht.

## Patentansprüche

1. Verfahren zur Herstellung von Verbundwerkstoffen aus Elastomeren oder thermoplastischen Elastomeren und darin eingebetteten hoch chemikalien- und temperaturbeständigen Polymertextilien oder -folien,
**gekennzeichnet durch** zumindest folgende Schritte:
- Erwärmen der Polymertextilien oder- folien vor der Einbettung in eine unvulkanisierte Kautschukmischung oder in ein nicht ausgehärtetes thermoplastisches Elastomer auf Temperaturen oberhalb von 260 °C in der Art, dass die Polymerketten der Polymertextilien oder -folien an der Oberfläche physikalisch und/oder chemisch modifiziert werden, wobei die Reißkraft um weniger als 15 % reduziert wird und die Trennkraft zwischen Polymertextilien oder - folien und Elastomer oder thermoplastischem Elastomer im Verbund im Vergleich zum Verbund mit den nicht erwärmten Polymertextilien oder -folien um mindestens 100 % erhöht wird,
- Einbettung der Polymertextilien oder -folien in eine unvulkanisierte Kautschukmischung oder ein nicht ausgehärtetes thermoplastisches Elastomer und gegebenenfalls Aufbringung weiterer Lagen und Schichten und
- Vulkanisation oder Aushärtung des Verbundes.

2. Verfahren nach Anspruch 1, **dadurch gekennzeichnet, dass** die Polymertextilien oder -folien auf Temperaturen ≥ 300 °C erwärmt werden.

3. Verfahren nach Anspruch 1 oder 2, **dadurch gekennzeichnet, dass** das Erwärmen der Polymertextilien oder -folien im Wesentlichen spannungsfrei erfolgt.

4. Verfahren nach zumindest einem der Ansprüche 1 bis 3, **dadurch gekennzeichnet, dass** die Polymerketten der Polymertextilien oder -folien an der Oberfläche so chemisch modifiziert werden, dass an der Oberfläche eine irreversible Farbveränderung vorliegt.

5. Verfahren nach zumindest einem der Ansprüche 1 bis 4, **dadurch gekennzeichnet, dass** das Erwärmen der Polymertextilien oder -folien in einer reaktiven Gasatmosphäre erfolgt.

6. Verfahren nach zumindest einem der Ansprüche 1 bis 5, **dadurch gekennzeichnet, dass** die Polymertextilien oder -folien in einem Ofen erwärmt werden.

7. Verfahren nach zumindest einem der Ansprüche 1 bis 5, **dadurch gekennzeichnet, dass** die Polymertextilien oder -folien durch Durchlaufen einer offenen Flamme erwärmt werden.

8. Verfahren nach zumindest einem der Ansprüche 1 bis 8, **dadurch gekennzeichnet, dass** die Polymertextilien linienförmige Gebilde oder Gewebe sind.

9. Verfahren nach Anspruch 8, **dadurch gekennzeichnet, dass** die Polymertextilien aus Poly(p-phenylen-2,6-benzobisoxazol) bestehen.

10. Verfahren nach Anspruch 8, **dadurch gekennzeichnet, dass** die Polymertextilien aus meta-Aramid bestehen.

11. Verfahren nach zumindest einem der Ansprüche 1 bis 10, **dadurch gekennzeichnet, dass** die Polymertextilien oder -folien nach dem Erwärmen und vor der Einbettung mit einem Haftvermittler versehen werden.

12. Verfahren nach zumindest einem der Ansprüche 1 bis 11, **dadurch gekennzeichnet, dass** dem einbettenden Material zumindest eine haftungsfördernde Substanz zugesetzt wird.

13. Verbundwerkstoff aus Elastomeren oder thermoplastischen Elastomeren und darin eingebetteten hoch chemikalien- und temperaturbeständigen Polymertextilien oder - folien, der nach dem Verfahren nach zumindest einem der vorhergehenden Ansprüche hergestellt ist.
